# EUROPEAN PATENT SPECIFICATION

(11) **EP 3 498 557 B1**
(45) Date of publication and mention of the grant of the patent: **29.07.2020**
(21) Application number: 17208128.3
(22) Date of filing: 18.12.2017
(51) Int. Cl.: B60W 30/16, B60W 10/18, B60W 10/20, B60W 30/095, B60W 30/09

(54) **METHOD AND SYSTEM FOR ROAD SAFETY IN DETECTING NEARBY VEHICLES SWERVING TO AVOID ACCIDENTS**
VERFAHREN UND SYSTEM ZUR VERKEHRSSICHERHEIT BEI DER ERKENNUNG VON IN DER NÄHE BEFINDLICHEN ABSCHWENKENDEN FAHRZEUGEN ZUR VERHÜTUNG VON UNFÄLLEN
PROCÉDÉ ET SYSTÈME DE SÉCURITÉ ROUTIÈRE PERMETTANT DE DÉTECTER DES VÉHICULES À PROXIMITÉ FAISANT UN ÉCART POUR ÉVITER DES ACCIDENTS

(43) Date of publication of application: 19.06.2019
(73) Proprietor: Continental Automotive GmbH, 30165 Hannover (DE)
(72) Inventor: Padiri, Bhanu Prakash, 560037 Bangalore (IN)
(74) Representative: Reuter, Andreas

(56) References cited:
- EP-A1- 3 176 541
- CN-A- 104 616 318
- DE-T5-112015 003 610
- US-A1- 2016 321 523

## Description

The invention relates to a vehicle sensing and control system that identifies a potential hazard of a cycle and a method for operating such a system.

### Prior art

EP 2 699 462 B1 shows a method for controlling the driving dynamics of a vehicle, especially of a single-track or dual-track land craft. The driving dynamics of the vehicle are controlled by way of brake and/or engine intervention, notably depending on a change of motion of the vehicle in the three-dimensional space and relative to the earth coordinate system and depending on the effective direction of gravity or the earth's gravitational pull.

EP 3 176 541 A1 describes a method for operating a vehicle equipped with a surroundings sensor system. In this method, at least one preceding and/or oncoming two-wheeler is detected at least as a function of data of the surroundings sensor system.

DE 11 2015 003610 T5 shows a saddled vehicle which has a detection means for detecting a traffic lane in which the vehicle travels and for detecting other vehicles and a cruise control means for judging the other vehicles detected by the detection means.

Autonomous cruise control (ACC) systems can assist the driver to keep a certain distance to a vehicle ahead. In addition to increasing the comfort of the driver, such systems can increase the safety by avoiding collisions.

For example, a vehicle speed control system is known from document US 5901806 A which provides means for adjusting the speed of the vehicle based on an input of the driver, the actual speed of the vehicle and a distance from a forward vehicle.

ACC systems rely on the exact knowledge of the distance between the controlled vehicle (in the following denoted as "ego vehicle") and the further vehicle in front of the controlled vehicle. The distance is usually computed based on radar data or lidar data but can also be obtained from other sensors, such as camera devices or infrared sensors.

To provide autonomous or semi-autonomous driving functions, a vast amount of information relating to the environment of the vehicle must be taken into account. For instance, lane detection methods are known which allow the prediction of the future course of the road.

### Problem and solution

In view of the above, it is therefore an object of the present invention to provide a way to identify a potential hazard of a preceding bicycle or Motorcycle or Tri wheel like Tuk Tuk.

A vehicle sensing and control system as recited in the main claim is provided. Further, the invention provides a method as recited in claim 9. Various preferred features of the invention are recited in the dependent claims.

According to the invention there is provided a vehicle sensing and control system comprising an environment sensor configured to sense an environment outside of the vehicle, a processor in communication with the environment sensor and configured to identify a cycle travelling in the environment and determine an angular displacement of the cycle with respect to an axis perpendicular to the ground. The processor is configured to identify a potential hazard presented by the cycle based at least partially on changes in the angular displacement of the cycle.

Identifying a potential hazard presented by the cycled based at least partially on changes in the angular displacement of the cycle is characterized by sensing a number of oscillations of the cycle about the axis during a predetermined time period and determining if the number of oscillations exceeds a predetermined value.

According to a further aspect, the invention provides a vehicle control mechanism configured to adjust at least one aspect of control of the vehicle based on the potential hazard presented by the cycle.

At least one aspect of control of the vehicle may be further characterized by braking the vehicle in response to the potential hazard presented by the cycle.

According to a possible further embodiment, at least one aspect of control of the vehicle may be further characterized by steering the vehicle around the cycle in response to the potential hazard presented by the cycle. The vehicle sensing system may be further characterized by the environment sensor being at least one of a camera, a radar device, and a lidar device.

According to a further embodiment, the determining of an angular displacement of the cycle may be further characterized by applying a differential tracking algorithm.

According to a further embodiment of the invention, the differential tracking algorithm may comprise at least one of a Particle Filter, Sequential Monte Carlo (SMC) filter, Extended Kalman filter, a Kanade-Lucas-Tomasi feature tracker, and an optical flow method.

The Particle filter method would be very effective in detecting and tracking, considering non-linear nature of the movement/Wobble of the Bicycle/Motor cycle.

According to a further embodiment of the invention, the differential tracking algorithm may comprise a Machine/Deep learning technique for a Neural network or Recurrent Neural network.

Machine/Deep learning techniques like CNN or RNN techniques may be employed to effectively detect the hazard. These techniques need data for training the network. Synthetic data or real recorded data that has been captured the swerve scenarios in various environment conditions may be used for training the network. Once network is trained, then it can be used for detecting these scenarios anywhere.

A vehicle sensing and control method according to the invention comprises sensing an environment outside of the vehicle with an environmental sensor, identifying a cycle travelling in the environment with a processor in communication with the environmental sensor, determining an angular displacement of the cycle with respect to an axis perpendicular to the ground, wherein the method identifies a potential hazard presented by the cycle based at least partially on changes in the angular displacement of the cycle.

The step of identifying a potential hazard is characterized by sensing a number of oscillations of the cycle about the axis during a predetermined time period and determining if the number of oscillations exceeds a predetermined value.

According to a further embodiment of the method, the method may be further characterized by adjusting at least one aspect of control of the vehicle based on the potential hazard presented by the cycle.

The step of adjusting at least one aspect of control of the vehicle may be further characterized by braking the vehicle in response to the potential hazard presented by the cycle.

According to a further embodiment of the method, the step of adjusting at least one aspect of control of the vehicle may be further characterized by steering the vehicle around the cycle in response to the potential hazard presented by the cycle.

The step of determining an angular displacement of the cycle may be further characterized by applying a differential tracking algorithm.

### Figure description

For a more complete understanding of the invention and the advantages thereof, exemplary embodiments of the invention are explained in more detail in the following description with reference to the accompanying drawing figures, in which like reference characters designate like parts and in which:
Fig. 1 shows a bicycle in a surrounding of a vehicle.
Fig. 2 shows a bicycle in a surrounding of a vehicle and a movement of said bicycle in a top-down view.
Fig. 3 shows a further bicycle in a surrounding of a vehicle.

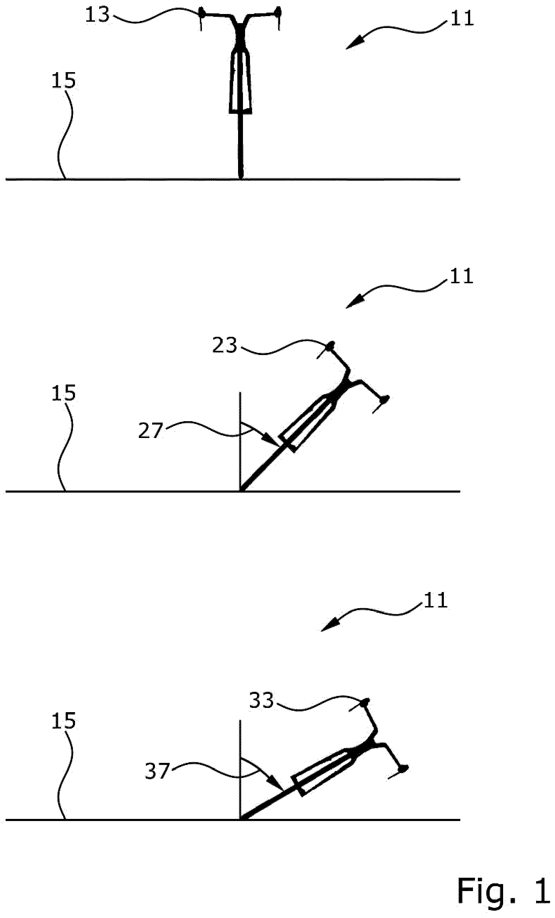

Fig. 1 shows a surrounding 11 of a vehicle. The system detects a bicycle 13, 23, 33 on a surface 15 and measures an angle 27, 37 between the bicycle 13, 23, 33 and an axis 14 perpendicular the surface 15. That angle stands for an angular displacement of the bicycle.

Figure 1 shows three examples of a bicycle 13, 23, 33 in the environment of a vehicle. In the first example (bicycle 13) the angle is perpendicular to the surface 15 and therefore no angular displacement is visible in the first example of figure 1.

The system identifies a potential hazard of the bicycle presented by the angles 27, 37. An angle of approximate 90 degrees is relative safe and the probability of a hazard is low, as shown in the first example. In the second example, the angle 27 is approximate 45 degrees from perpendicular and the probability of a hazard is higher than in the first example. The angle 37 in the third example is larger than approximate 60 degrees from perpendicular. This angle 37 leads to a potential hazard of the bicycle. The system in the vehicle can assume that the bicycle 33 is in a critical situation and prepares the vehicle for a reaction on this situation. The reaction may be, for example, braking or steering.

It should be considered that an initial cycle track is smooth and is taken as reference/mean value, and then angular displacement refers to the standard deviation from mean value. A displacement within 1-σ (1-standard deviation) is suitable, but displacement above 1-σ value change for some 3 or 4 oscillations may trigger a potential hazard and an alert. Similarly if displacement over or near 2-σ (2-standard deviation) is considered risk and can immediately trigger and alert as it is considered sudden change/wobble.

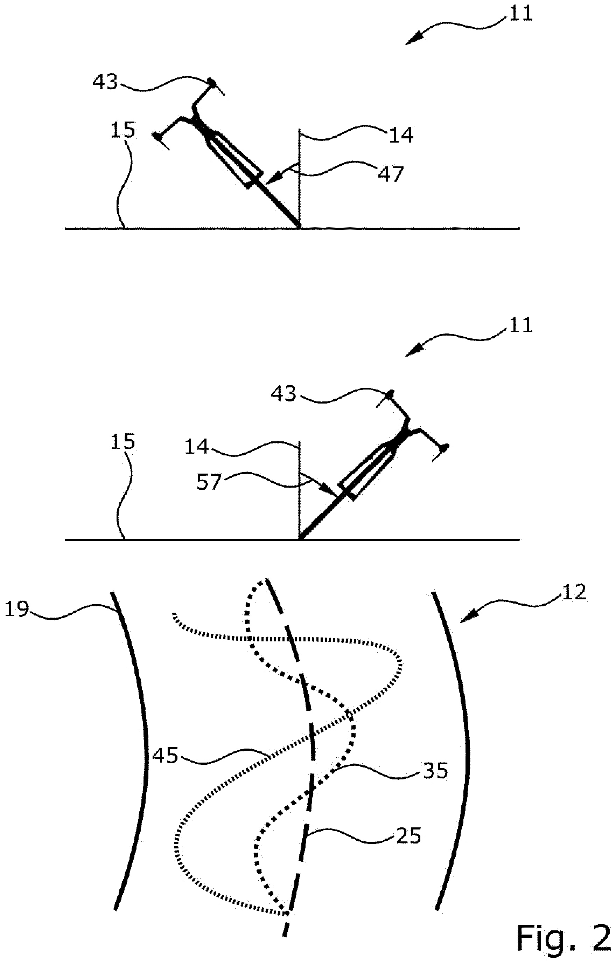

Fig. 2 shows two sensor pictures of a bicycle 43. The pictures were taken one after another. The bicycle 43 oscillates from one side to the other side and the angle 47, 57 is approximate 45 degrees from perpendicular. The bicycle 43 is still in a safe situation according to the angles 47, 57. However, the heavy change in the angle 47, 57 are an indication for a potential hazard.

The movement of the bicycle 43 is shown in a top-down view 12. The road has left and right boarders 19. An uncritical moving path 25 is in the middle of the road without oscillating movement. The oscillating bicycle 43 is travelling on one of the dotted paths 35, 45. After the system has sensed a predetermined number of oscillations of the bicycle about the axis during a predetermined time period, the system recognized a potential hazard of the bicycle.

Figure 2 further explains that if displacement changes are above 1-σ more than 3 times as in line 45 (threshold), then it triggers an alert. Displacement changes within 1-σ, as shown with line 35, do not trigger an alert. Any displacement over 2-σ will immediately trigger an alert. As particle filter is efficient in non-linear tracking, this method can be effectively used.

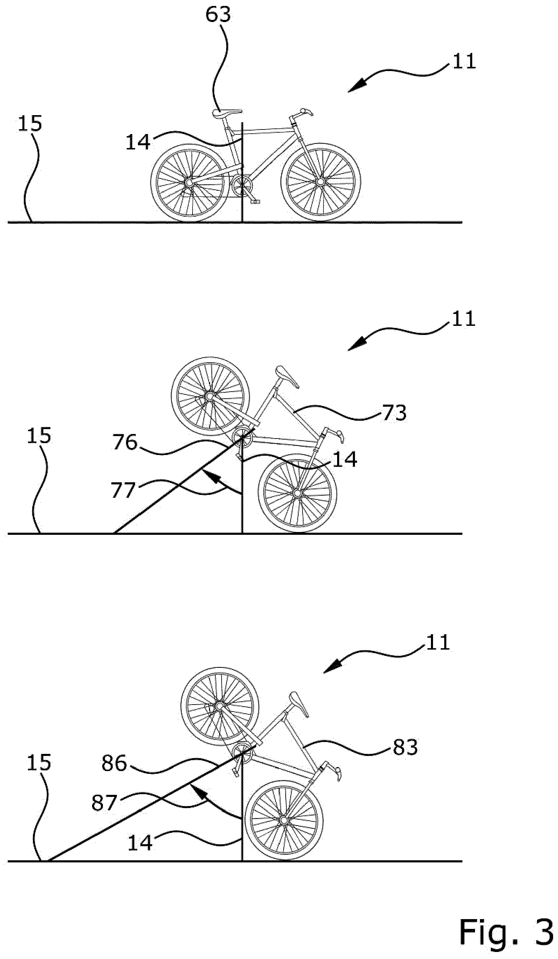

The bicycle 63, 73, 83, as shown in figure 3, is moving along a road 15 and is shown in a side view. A potential hazard is detected by an angular displacement 67, 73, 83 between the bicycle and an axis 14 perpendicular to the ground 15. In this example, the angular displacement 73, 87 is measured between an axis 76, 86 perpendicular to the bicycle chain and an axis 14 perpendicular to the ground 15. It is also possible to measure the angular displacement in different manner. Any angle above 45 degrees is critical in the example shown in figure 3.

## Claims

1. A vehicle sensing and control system, comprising:
an environment sensor configured to sense an environment (11) outside of the vehicle;
a processor in communication with the environment sensor and configured to identify a cycle (13, 23, 33, 43, 63, 73, 83) travelling in the environment (11 ,
determine an angular displacement (27, 37, 47, 57, 77, 87) of the cycle with respect to an axis (14) perpendicular to the ground and identify a potential hazard presented by the cycle based at least partially on changes in the angular displacement of the cycle,
wherein the processor is further **characterized by**:
sensing a number of oscillations (35, 45) of the cycle about the axis (14) during a predetermined time period; and
determining if the number of oscillations exceeds a predetermined value.

2. The vehicle sensing and control system of claim 1,
further **characterized by** a vehicle control mechanism configured to adjust at least one aspect of control of the vehicle based on the potential hazard presented by the cycle (13, 23, 33, 43, 63, 73, 83).

3. The vehicle sensing and control system of claim 2,
wherein the vehicle control mechanism is further **characterized by** braking the vehicle in response to the potential hazard presented by the cycle.

4. The vehicle sensing and control system of claim 2, wherein the vehicle control mechanism is further **characterized by** steering the vehicle around the cycle in response to the potential hazard presented by the cycle (13, 23, 33, 43, 63, 73, 83).

5. The vehicle sensing and control system of any of claims 1-4,
further **characterized by** the environment sensor being at least one of a camera, a radar device, and a lidar device.

6. The vehicle sensing and control system of any of claims 1-5,
wherein the processor is further **characterized by** applying a differential tracking algorithm.

7. The vehicle sensing and control system of claim 6, wherein the processor is further
**characterized in that** the differential tracking algorithm comprises at least one of a Particle Filter, Sequential Monte Carlo (SMC) filter, Extended Kalman filter or, a Kanade-Lucas-Tomasi feature tracker, and an optical flow method.

8. The vehicle sensing and control system of claim 6, wherein the processor is further **characterized in that** the differential tracking algorithm comprises a Machine/Deep learning technique for a Neural network or Recurrent Neural network.

9. A vehicle sensing and control method, comprising:
sensing an environment (11) outside of the vehicle with an environmental sensor;
identifying a cycle (13, 23, 33, 43, 63, 73, 83) travelling in the environment (11) with a processor in communication with the environmental sensor;
determining an angular displacement (27, 37, 47, 57, 77, 87) of the cycle with respect to an axis (14) perpendicular to the ground (15);
identifying a potential hazard presented by the cycle based at least partially on changes in the angular displacement of the cycle,
the method **characterized in that** the step of identifying a potential hazard further comprises: sensing a number of oscillations (35, 45) of the cycle about the axis (14) during a predetermined time period;
and
determining if the number of oscillations exceeds a predetermined value.

10. The method of claim 9, further **characterized by** adjusting at least one aspect of control of the vehicle based on the potential hazard presented by the cycle.

11. The method of claim 10, wherein the step of adjusting at least one aspect of control of the vehicle is further **characterized by** braking the vehicle in response to the potential hazard presented by the cycle.

12. The method of claim 10, wherein the step of adjusting at least one aspect of control of the vehicle is further **characterized by** steering the vehicle around the cycle in response to the potential hazard presented by the cycle.

13. The method of any of claims 9-12, wherein the step of determining an angular displacement of the cycle is further **characterized by** applying a differential tracking algorithm.

## Patentansprüche

1. Fahrzeugerkennungs- und -steuersystem, umfassend:
einen Umgebungssensor, der dazu konfiguriert ist, eine Umgebung (11) außerhalb des Fahrzeuges zu erkennen;
einen Prozessor, der mit dem Umgebungssensor in Kommunikation steht und dazu konfiguriert ist, ein sich in der Umgebung (11) bewegendes Fahrrad (13, 23, 33, 43, 63, 73, 83) zu identifizieren, eine Winkelverschiebung (27, 37, 47, 57, 77, 87) des Fahrrades bezüglich einer lotrecht zum Boden verlaufenden Achse (14) zu bestimmen und eine durch das Fahrrad dargestellte potenzielle Gefahr zumindest teilweise auf der Grundlage von Veränderungen der Winkelverschiebung des Fahrrades zu identifizieren, wobei der Prozessor
ferner **gekennzeichnet ist durch**:
Erkennen einer Anzahl von Schwankungen (35, 45) des Fahrrades um die Achse (14) herum während eines vorgegebenen Zeitraumes; und
Bestimmen, ob die Anzahl von Schwankungen einen vorgegebenen Wert überschreitet.

2. Fahrzeugerkennungs- und -steuersystem nach Anspruch 1, ferner **gekennzeichnet durch** einen Fahrzeugsteuermechanismus, der dazu konfiguriert ist, mindestens einen Aspekt der Steuerung des Fahrzeuges auf der Grundlage der **durch** das Fahrrad (13, 23, 33, 43, 63, 73, 83) dargestellten potenziellen Gefahr anzupassen.

3. Fahrzeugerkennungs- und -steuersystem nach Anspruch 2, wobei der Fahrzeugsteuermechanismus ferner durch das Bremsen des Fahrzeuges als Reaktion auf die durch das Fahrrad dargestellte potenzielle Gefahr gekennzeichnet ist.

4. Fahrzeugerkennungs- und -steuersystem nach Anspruch 2,
wobei der Fahrzeugsteuermechanismus ferner durch das Lenken des Fahrzeuges um das Fahrrad herum als Reaktion auf die durch das Fahrrad (13, 23, 33, 43, 63, 73, 83) dargestellte potenzielle Gefahr gekennzeichnet ist.

5. Fahrzeugerkennungs- und -steuersystem nach einem der Ansprüche 1-4,
ferner **dadurch gekennzeichnet, dass** der Umgebungssensor mindestens eines aus einer Kamera, einer Radarvorrichtung und einer Lidarvorrichtung ist.

6. Fahrzeugerkennungs- und -steuersystem nach einem der Ansprüche 1-5,
wobei der Prozessor ferner durch das Anwenden eines Differentialnachlaufalgorithmus gekennzeichnet ist.

7. Fahrzeugerkennungs- und -steuersystem nach Anspruch 6,
wobei der Prozessor ferner **dadurch gekennzeichnet ist, dass**
der Differentialnachlaufalgorithmus mindestens eines aus einem Partikelfilter, einem sequenziellen Monte-Carlo-Filter (SMC-Filter), einem erweiterten Kalman-Filter oder einem Kanade-Lucas-Tomasi-Merkmal-Tracker und einem Verfahren des optischen Flusses umfasst.

8. Fahrzeugerkennungs- und -steuersystem nach Anspruch 6,
wobei der Prozessor ferner **dadurch gekennzeichnet ist, dass**
der Differentialnachlaufalgorithmus eine Technik des maschinellen/tiefen Lernens für ein neuronales Netz oder rekurrentes neuronales Netz umfasst.

9. Fahrzeugerkennungs- und -steuerverfahren, umfassend:
Erkennen einer Umgebung (11) außerhalb des Fahrzeuges mit einem Umgebungssensor;
Identifizieren eines sich in der Umgebung (11) bewegenden Fahrrades (13, 23, 33, 43, 63, 73, 83) mit einem mit dem Umgebungssensor kommunizierenden Prozessor;
Bestimmen einer Winkelverschiebung (27, 37, 47, 57, 77, 87) des Fahrrades bezüglich einer lotrecht zum Boden (15) verlaufenden Achse (14);
Identifizieren einer durch das Fahrrad dargestellten potenziellen Gefahr zumindest teilweise auf der Grundlage von Veränderungen der Winkelverschiebung des Fahrrades,
wobei das Verfahren **dadurch gekennzeichnet ist, dass** der Schritt des Identifizierens einer potenziellen Gefahr ferner umfasst:
Erkennen einer Anzahl von Schwankungen (35, 45) des Fahrrades um die Achse (14) herum während eines vorgegebenen Zeitraumes; und
Bestimmen, ob die Anzahl von Schwankungen einen vorgegebenen Wert überschreitet.

10. Verfahren nach Anspruch 9, ferner **gekennzeichnet durch** das Anpassen mindestens eines Aspektes der Steuerung des Fahrzeuges auf der Grundlage der **durch** das Fahrrad dargestellten potenziellen Gefahr.

11. Verfahren nach Anspruch 10, wobei der Schritt des Anpassens mindestens eines Aspektes der Steuerung des Fahrzeuges ferner durch das Bremsen des Fahrzeuges als Reaktion auf die durch das Fahrrad dargestellte potenzielle Gefahr gekennzeichnet ist.

12. Verfahren nach Anspruch 10, wobei der Schritt des Anpassens mindestens eines Aspektes der Steuerung des Fahrzeuges ferner durch das Lenken des Fahrzeuges um das Fahrrad herum als Reaktion auf die durch das Fahrrad dargestellte potenzielle Gefahr gekennzeichnet ist.

13. Verfahren nach einem der Ansprüche 9-12, wobei der Schritt des Bestimmens einer Winkelverschiebung des Fahrrades ferner durch das Anwenden eines Differentialnachlaufalgorithmus gekennzeichnet ist.

## Revendications

1. Système de détection et de contrôle de véhicule, comprenant :
un capteur d'environnement conçu pour détecter un environnement (11) à l'extérieur du véhicule ;
un processeur en communication avec le capteur d'environnement et conçu pour identifier un vélo (13, 23, 33, 43, 63, 73, 83) se déplaçant dans l'environnement (11) ,
déterminer un déplacement angulaire (27, 37, 47, 57, 77, 87) du vélo relativement à un axe (14) perpendiculaire au sol et
identifier un danger potentiel présenté par le vélo basé au moins partiellement sur des changements du déplacement angulaire du vélo,
le processeur étant **caractérisé en outre par** :
détecter un nombre d'oscillations (35, 45) du vélo sur l'axe (14) pendant une période de temps prédéterminée ; et
déterminer si le nombre d'oscillations dépasse une valeur prédéterminée.

2. Système de détection et de contrôle de véhicule selon la revendication 1,
**caractérisé en outre par** un mécanisme de contrôle de véhicule conçu pour ajuster au moins un aspect de contrôle du véhicule basé sur le danger potentiel présenté par le vélo (13, 23, 33, 43, 63, 73, 83).

3. Système de détection et de contrôle de véhicule selon la revendication 2,
le mécanisme de contrôle de véhicule étant **caractérisé en outre par** freiner le véhicule en réponse au danger potentiel présenté par le vélo.

4. Système de détection et de contrôle de véhicule selon la revendication 2,
le mécanisme de contrôle de véhicule étant **caractérisé en outre par** diriger le véhicule autour du vélo en réponse au danger potentiel présenté par le vélo (13, 23, 33, 43, 63, 73, 83).

5. Système de détection et de contrôle de véhicule selon l'une quelconque des revendications 1-4,
**caractérisé en outre par le fait que** le capteur d'environnement est au moins un capteur parmi une caméra, un dispositif radar et un dispositif lidar.

6. Système de détection et de contrôle de véhicule selon l'une quelconque des revendications 1-5,
le processeur étant **caractérisé en outre par** l'application d'un algorithme de suivi différentiel.

7. Système de détection et de contrôle de véhicule selon la revendication 6, le processeur étant **caractérisé en outre en ce que**
l'algorithme de suivi différentiel comprend au moins un élément parmi un filtre particulaire, un filtre séquentiel de Monte-Carlo (SMC), un filtre de Kalman étendu ou une méthode Kanade-Lucas-Tomasi, et une méthode de flux optique.

8. Système de détection et de contrôle de véhicule selon la revendication 6,
le processeur étant **caractérisé en outre en ce que** l'algorithme de suivi différentiel comprend une technique d'apprentissage machine/profond pour un réseau de neurones ou un réseau de neurones récurrents.

9. Système de détection et de contrôle de véhicule, comprenant :
détecter un environnement (11) à l'extérieur du véhicule avec un capteur d'environnement ;
identifier un vélo (13, 23, 33, 43, 63, 73, 83) se déplaçant dans l'environnement (11) avec un processeur en communication avec le capteur d'environnement ;
déterminer un déplacement angulaire (27, 37, 47, 57, 77, 87) du vélo relativement à un axe (14) perpendiculaire au sol (15) ;
identifier un danger potentiel présenté par le vélo basé au moins partiellement sur des changements du déplacement angulaire du vélo,
le procédé étant **caractérisé en ce que**
l'étape d'identification d'un danger potentiel comprend en outre :
détecter un nombre d'oscillations (35, 45) du vélo sur l'axe (14) pendant une période de temps prédéterminée ; et
déterminer si le nombre d'oscillations dépasse une valeur prédéterminée.

10. Procédé selon la revendication 9, **caractérisé en outre par** l'ajustement d'au moins un aspect de contrôle du véhicule basé sur le danger potentiel présenté par le vélo.

11. Procédé selon la revendication 10, l'étape d'ajustement d'au moins un aspect de contrôle du véhicule étant **caractérisée en outre par** freiner le véhicule en réponse au danger potentiel présenté par le vélo.

12. Procédé selon la revendication 10, l'étape d'ajustement d'au moins un aspect de contrôle du véhicule étant **caractérisée en outre par** diriger le véhicule autour du vélo en réponse au danger potentiel présenté par le vélo.

13. Procédé selon l'une quelconque des revendications 9-12, l'étape de détermination d'un déplacement angulaire du vélo étant **caractérisée en outre par** l'application d'un algorithme de suivi différentiel.
